# EUROPEAN PATENT APPLICATION

(11) **EP 1 804 214 A2**
(43) Date of publication of application: **04.07.2007**
(21) Application number: 06027049.3
(22) Date of filing: 29.12.2006
(51) Int. Cl.: G06T 1/60

(54) **Memory architecture for image processing**

(30) Priority: 30.12.2005 IN DE35492005
(71) Applicant: STMicroelectronics Pvt. Ltd., 201308 Greater Noida, Uttar Pradesh (IN)
(72) Inventor: Mahesh, Chandra, Noida UP (IN)
(74) Representative: Ferrari, Barbara

(57) **Abstract**

The present invention relates to a memory architecture (10) for image processing comprising a memory array having multiple multi-byte memory data paths of equal multi-byte data width, and a multiplexing structure (13) connected to the output of the multiple multi-byte data paths, capable of selectively providing a multi-byte data path of a desired width containing a desired permutation of bytes chosen from one or more of the multiple data paths.

## Description

### Field of the Invention

The present invention relates to a memory architecture that is optimized for image processing, in particular rotation and mirroring.

### Background of the Invention

As it is well known, image processing is an essential aspect of the functioning of a vast majority of modern devices, ranging from computing systems to consumer devices such as cellular phones and Personal Digital Assistants (PDAs). The interfaces of these devices are becoming increasingly graphical in nature in order to provide a more user friendly interface.

These so called Graphical User Interfaces (GUIs) are also increasing in sophistication as greater computing power becomes available in the devices containing them.

It also known that image processing systems are characterized by the requirement of relatively large memory structures that store images or imaging data and that the related image processing activity involves the manipulation of this large amount of imaging data at very high speeds so as to enable real-time visualization of the images themselves as well as the movement of these images.

Typical image processing operations include image translation and rotation. This high-speed manipulation of the image data is performed by a processing engine such as Signal Processors, General Purpose Processors or Special purpose Image Processors

These image processing engines access the image data in the memory system storing them through high-speed buses that connect these elements together.

Existing memory systems are however designed also for meeting the needs of normal non-imaging data processing functions. As such, conventional memory system are designed for normal sequential memory access.

When conventional memory systems are used for image processing, the image data (or pixels) are packed to improve the memory utilization, for example, if memory datawith is 64-bits then it will contain four 16-bit pixels or two 24-bit pixels and two bytes of the third pixel.

The resulting performance of such memory systems is less than optimal as the typical frequently used functions of an image processing, e.g. translation or rotation of the image, very often require non-sequential memory access.

Consequently several memory accesses are required for each step of these kinds of image processing function, resulting in inefficient and slow operation for a given clock speed.

U.S. Patent No. 4,716,533 describes a method for improving the performance of a memory system that is used for image rotation by 90 degrees or a multiple of 90 degrees. This document describes a system and a method for movement of image data from an initial position to a subsequent position involving rotation by 90 degrees or a multiple of 90 degrees with or without image translation. This document however focuses on the determination of the optimum movement of the imaging data regardless of the speed of accessing data from the used memory system. The document does not address the issues relating to the speed and efficiency of accessing data from the used memory system, hence its effectiveness is limited by the memory access mechanism.

The technical problem underlying the present invention is that of providing a memory architecture and a method for image processing having structural and functional characteristics which allow efficient image processing applications, in particular involving image rotation by 90 degrees or a multiple of 90 degrees, in this way overcoming the limits which still affect the devices realised according to the prior art.

### Objects and Summary of the Invention

The solution idea underlying the present invention is that of providing a memory architecture for image processing comprising:
- a memory array having multiple multi-byte memory data paths of equal multi-byte data width, and
- a multiplexing structure connected to the output of said multiple multi-byte data paths, capable of selectively providing a multi-byte data path of a desired width containing a desired permutation of bytes chosen from one or more of said multiple data paths.

The said multiplexing arrangement comprises a two-level hierarchy of multiplexers in which:
- a first level of multiplexers combines one or more individual bytes from one or more multi-byte data paths to create multiple data paths of the desired width in the desired permutations based on the desired set of operations, and
- a second level of multiplexers selects a desired one of said created multiple multi-byte data paths, based on the desired operation.

The multiplexing structure is configurable to provide different sets of byte permutations based on changing requirements.

The invention further provides a method for providing an efficient memory architecture for image processing, comprising the steps of:
- structuring the memory array as a multi-byte memory array having multiple data paths of equal multi-byte data width, and
- providing a multiplexing structure at the output of said memory array that selectively provides a multi-byte data path of a desired width containing a desired permutation of bytes chosen from one or more of said multiple data paths.

The multiplexing structure is provided by :
- combining one or more individual bytes from one or more multi-byte data paths to create multiple data paths of the desired width in the desired permutations based on the desired set of operations, and
- selecting a desired one of said created multiple multi-byte data paths, based on the desired operation.

The multiplexing structure can be configured to provide different sets of byte permutations based on changing requirements.

The characteristics and advantages of the memory architecture and of the method according to the invention will be apparent from the following description of an embodiment thereof given by way of indicative and non limiting example with reference to the annexed drawings.

### Brief Description of the Drawings

In such drawings:
Fig. 1 shows a block diagram of a memory architecture according to a preferred embodiment of the invention;
Fig. 2 shows a block diagram of Read and Write Logic blocks comprised into the memory architecture of Figure 1;
Fig. 3 shows the format of an address bus of the memory architecture of Figure 1; and
Fig. 4 shows the internal structure of a multiplexing arrangement of the memory architecture of Figure 1.

### Detailed Description of the Invention

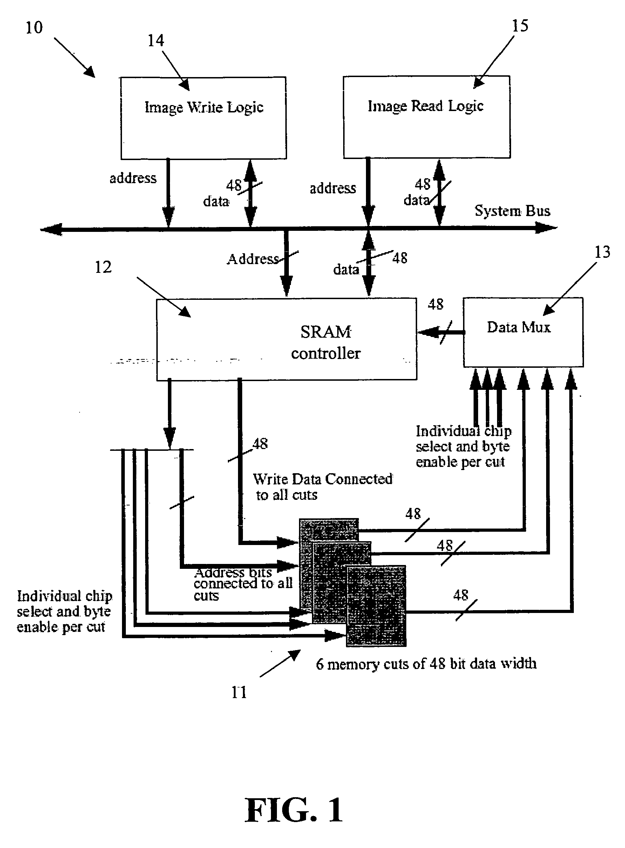

With reference to such figures, and in particular to Figure 1 which shows a preferred embodiment of the present invention, a memory architecture is schematically illustrated, globally indicated with 10.

As it will be clear from the following description of such a preferred embodiment, the memory architecture according to the present invention enables an efficient utilization of the system bus bandwidth for image manipulation functions.

In this aim, advantageously according to the invention, the memory architecture 10 uses six memory portions or cuts, each cut being of forty eight data width, along with simple data read and write logic blocks and a data multiplexer. It can be verified that, according to this embodiment, the best bus performance is met for 16-bit and 24-bit per pixel modes. The memory cuts form a memory array 11 having multiple multi-byte memory data paths of equal multi-byte data width.

Moreover, it should be noted that the proposed memory architecture can be extended to support also other formats, with only slight modification thereof.

More particularly, the memory cuts 11 are connected at their inputs to a SRAM controller 12 and at their outputs to a data multiplexer or glue 13, in turn connected to the SRAM controller 12.

The SRAM controller is also connected by respective address and data buses to a system bus.

The memory architecture 10 further comprises an image write logic block 14 and an image read logic block 15, being also connected by respective address and data buses to the system bus

The SRAM controller 12 provides each of the memory cuts 11 with an individual chip select signal and a byte enable signal. It also provide all the memory cuts 11 with the address bits and with the write data.

The signals issued from the memory cuts 11 are forwarded to the data multiplexer 13 and used therein to pack the data so that all the bits can be used. The data multiplexer 13 also receives the individual chip select and byte enable signals.

The data read and write logic blocks, 14 and 15, are connected with the system bus for receiving data inputs and control signals.

In the preferred embodiment the used data width is 48-bit wide, however this is not a necessary restriction and the data width and can be adjusted according to requirements.

According to this preferred embodiment, the memory architecture 10 is organised into six equal memory cuts of 48-bit wide data each. The reason for choosing 48-bit as the data width is to ensure that each single pixel of the processed image is addressed in each access.

The individual chip select and byte select signals are generated for each of the six memory cuts of 48-bit data width, which are in turn connected to the data multiplexer 13 for multiplexing the received data and sent back to the SRAM controller 12 through its 48-bit data bus.

Data multiplexing information has the multiplexing information that is to be used by the data multiplexer 13, also indicated as glue logic.

It should be noted that the memory architecture 10 utilizes a two level mutiplexing structure 13, in which a first level decides which combination of bytes from different memory cuts 11 make a valid combination depending on the selected mode, for instance a rotation of the data, and a second level selects which one of them should be selected, as will be more clearly explained in the following description.

In essence, the memory architecture 10 for image processing according to the invention comprises:
- a memory array 11 having multiple multi-byte memory data paths of equal multi-byte data width, and
- a multiplexing structure 13 connected to the output of the multiple multi-byte data paths, capable of selectively providing a multi-byte data path of a desired width containing a desired permutation of bytes chosen from one or more of the multiple data paths.

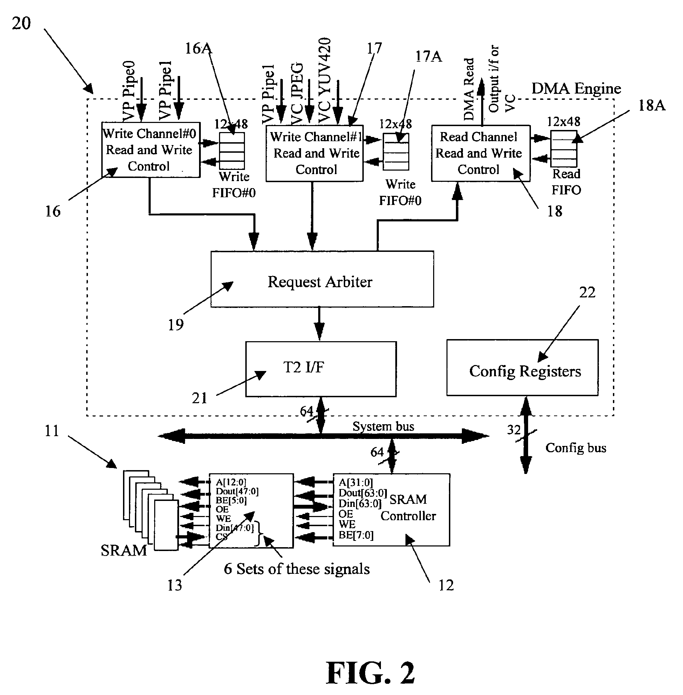

Figure 2 schematically shows the data read and write logic blocks, 14 and 15 according to the preferred embodiment of the memory architecture 10, indicated as DMA Engine 20 as a whole. The DMA engine 20 comprises two write channels 16 and 17 and one read channel 18 (also indicated as Write Channel#0, Write Channel#1 1 and Read channel in the figure) which comprise associated read and write control blocks and receive data and control signals.

The write and read channels 16-18 are bi-directionally connected to respective write and read FIFO memories 16A-18A (also indicated as Write FIFO#0, Write FIFO# and Read FIFO in the figure), each being of size 12*48 bits according to the preferred embodiment of the invention.

Such write and read channels 16-18 are also connected to a Request Arbiter 19, in turn bi-directionally connected, through an interface 21 to the system bus. In particular, such a Request Arbiter 19 is coupled to the Read Channel 18 for outputting data on receiving a read request.

The DMA engine 20 further comprises configuration registers 21 connected by a configuration bus to a system register bus interface (not shown since conventional).

As already explained with reference to figure 1, the system bus is further connected to the SRAM controller 12, which is in turn connected to the data multiplexer 13 and transmits and receives data from it.

The data multiplexer 13 is further connected to the memory cuts 11, in particular SRAMs with 6 sets of data and control signals.

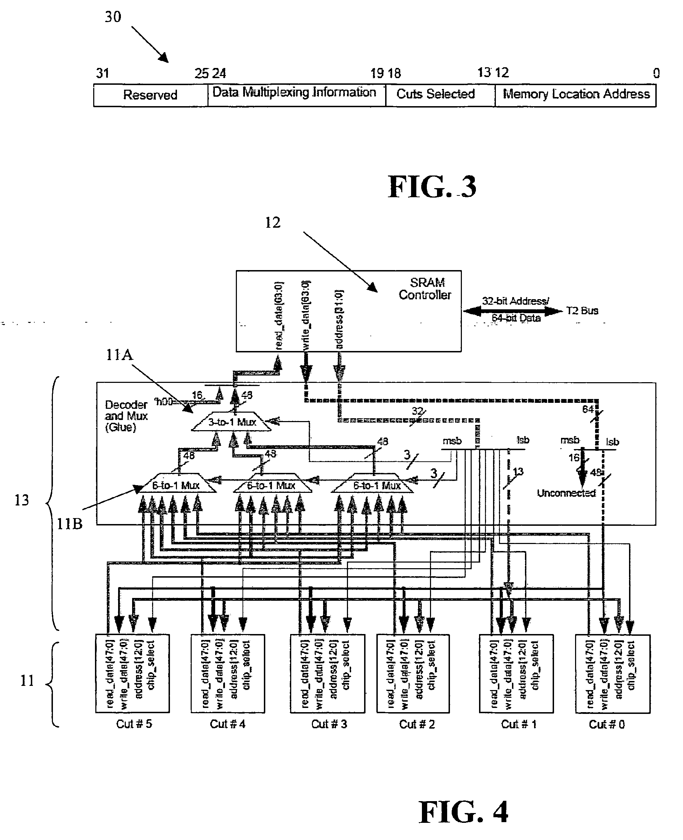

Figure 3 shows the format of the address bus 30, to be used in the memory architecture 10 according to the preferred embodiment of the invention, as above described. The read and write operations to the SRAM elements of the memory architecture 10 are performed in a manner such that only a small glue logic, i.e. a small data multiplexer 13, is required between the SRAM controller 12 and the SRAMs implementing the memory cuts 11, thus allowing the use of already existing SRAM Controllers.

In particular, the address bus 30 is 32-bit wide and all the bits are not used if a 256KBytes memory is used. Hence, upper memory addresses can be used for sending data multiplexing and cut selection information. In this aim, the 32-bits of the address bus are split into four different fields containing reserved data, data multiplexing information, cut selected and memory location address, respectively, as shown in figure 3.

In this regards, it should be remarked that the memory location address is the address passed to the memory cuts 11 and that the same address is also passed to all the memory cuts 11 of the memory architecture 10.

On the contrary, the Cut selected field has one bit for each memory cut 11. If the bit is '1' then the corresponding memory cut 11 is selected (chip select is asserted) and if the bit is '0', the corresponding memory cut is not selected (chip select deasserted). In particular, referring to figure 3, bit 13 corresponds to a first memory cut, cut0, bit 14 to a second memory cut, cut1 and so on till bit 18 which corresponds to the last memory cut, cut5. It should be also noted that more than one cut may be selected at the same time.

Moreover, figure 4 shows the internal structure of the Data multiplexer 13 connected to the memory cuts 11 through a plurality of multiplexing paths. The data multiplexing information field of the address bus 30 has the multiplexing information that is to be used by the glue logic, i.e. the data multiplexer 13 in a two level mode.

More particularly, a first level 13A of this glue logic decides which bytes of different memory cuts 11 make a valid combination depending on modes (rotation etc.) and a second level 13B decides which one of them is selected.

Therefore the memory architecture 10 according to the present invention comprises a multiplexing structure 13, in turn including a two-level hierarchy of multiplexers in which:
- the first level 13A of multiplexers combines one or more individual bytes from one or more multi-byte data paths to create multiple data paths of the desired width in the desired permutations based on the desired set of operations, and
- the second level 13B of multiplexers selects a desired one of the created multiple multi-byte data paths, based on the desired operation.

Moreover, advantageously according to the invention, the multiplexing structure 13 is configurable to provide different sets of byte permutations based on changing requirements.

A non limitative example of the multiplexing modes is given in the following table 1:

**Table 1: Data Multiplexing During SRAM Reads**

| **Bit 2:0** | **Bit 5:3** | | | |
|---|---|---|---|---|
| | **000** | **010** | **011** | **001^{a},100-111** |
| 000 | D₀₅D₀₄D₀₃D₀₂D₀₁D₀₀^{b} | D₂₁D₂₀D₁₁D₁₀D₀₁D₀₀ | D₁₂D₁₁D₁₀D₀₂D₀₁D₀₀ | RESERVED^{c} |
| 001 | D₁₅D₁₄D₁₃D₁₂D₁₁D₁₀ | D₂₃D₂₂D₁₃D₁₂D₀₃D₀₂ | D₁₅D₁₄D₁₃D₀₅D₀₄D₀₃ | RESERVED |
| 010 | D₂₅D₂₄D₂₃D₂₂D₂₁D₂₀ | D₂₅D₂₄D₁₅D₁₄D₀₅D₀₄ | D₃₂D₃₁D₃₀D₂₂D₂₁D₂₀ | RESERVED |
| 011 | D₃₅D₃₄D₃₃D₃₂D₃₁D₃₀ | RESERVED | D₃₅D₃₄D₃₃D₂₅D₂₄D₂₃ | RESERVED |
| 100 | D₄₅D₄₄D₄₃D₄₂D₄₁D₄₀ | D₅₁D₅₀D₄₁D₄₀D₃₁D₃₀ | D₅₂D₅₁D₅₀D₄₂D₄₁D₄₀ | RESERVED |
| 101 | D₅₅D₅₄D₅₃D₅₂D₅₁D₅₀ | D₅₃D₅₂D₄₃D₄₂D₃₃D₃₂ | D₅₅D₅₄D₅₃D₄₅D₄₄D₄₃ | RESERVED |
| 110 | RESERVED | D₅₅D₅₄D₄₅D₄₄D₃₅D₃₄ | RESERVED | RESERVED |
| 111 | RESERVED | RESERVED | RESERVED | RESERVED |

wherein
010 and 011 are chosen so that BYTES_PER_PIXEL setting can directly be used (no logic required to generate select signals), 000 is used when the data read write is sequential (non-rotation modes) and O10 or O11 is used when rotation is required;
Dₙₘ means data byte m of memory cut n; the order is as it would appear in D[47:0]; and
Reserved indicates that it can be used if required for other modes 420 planar.

The addressing scheme for writing data in different modes will be different and is shown in the following table 2:

**Table 2: Memory Access Example for Data Write**

| **Line/ Data^{a}** | **Cut no/Address** | | **Line/ Data** | **Cut no/Address** | | **Line/ Data** | **Cut no/Address** | |
|---|---|---|---|---|---|---|---|---|
| | **Normal** | **Other** | | **Normal** | **Other** | | **Normal** | **Other** |
| 0,0 | 0/0 | 0/0 | 1,0 | (j+1)/k | 1/0 | 2,0 | (j+1)/k' | 2/0 |
| 0,1 | 1/0 | 0/1 | 1,1 | (j+2)/k | 1/1 | 2,1 | - | 2/1 |
| 0,2 | 2/0 | 0/2 | 1,2 | - | 1/2 | 2,2 | 5/k' | 2/2 |
| 0,3 | 3/0 | 0/3 | 1,3 | 5/k^{b} | 1/3 | 2,3 | 0/(k'+1) | 2/3 |
| 0,4 | 4/0 | 0/4 | 1,4 | 0/(k+1) | 1/4 | 2,4 | 1/(k'+1) | 2/4 |
| 0,5 | 5/0 | 0/5 | 1,5 | 1/(k+1) | 1/5 | 2,5 | 2/(k'+1) | 2/5 |
| 0,6 | 0/1 | 0/6 | 1,6 | 2/(k+1) | 1/6 | 2,6 | 3/(k'+1) | 2/6 |
| 0,7 | 1/1 | 0/7 | 1,7 | 3/(k+1) | 1/7 | 2,7 | 4/(k'+1) | 2/7 |
| -- | -- | -- | -- | -- | -- | -- | -- | -- |
| -- | -- | -- | -- | -- | -- | -- | -- | -- |
| 0,n^{o} | j/k^{d} | 0/m^{e} | 1,n | j/k' | 1/m | 2,n | j"/k" | 2/m |

wherein:
Data is 48-bits which means 2 or 3 pixels depending on 3Bytes/pixel 2Bytes/pixel; it is not necessarily for 1,3 (line/data) (cut no = 5); moreover, it can be for any data depending on the value of j, starting here if j = 1 and that the same is true for 2,2 (5/k', it's only if j' = 2);
n is the data for last pixel of the line;
j(or j' or j") and k (or k' or k") are the cut no. and address respectively for the last data of the line; and
m(or m' or m") is the address for the last data of the line. Note that the 6th line will start at (m+1) address of cut 0. Similarly, 7th at (m'+1) address of cut 1 and so on; m is also referred to as line_pitch in the following description and tables.

For read operations, the address generation logic needs to take care of the image transformation mode. The following table 3 shows an example of data read pattern for 90 degree rotated image.

**Table3: Memory Access Example for Data Read.**

| **Output Line/pixel** | **Input Line/pixel** | **Cut no/Address^{a}** | |
|---|---|---|---|
| | | **16-bit Color Mode** | **24-bit Color Mode** |
| 0,0 | 0,n | 0,1,2/LINE_PITCH-1 | 0,1/LINE_PITCH-1 |
| 0,1 | 1,n | | |
| 0,2 | 2,n | | 2,3/LINE_PITCH-1 |
| 0,3 | 3,n | 3,4,5/LINE_PITCH-1 | |
| 0,4 | 4,n | | 4,5/LINE_PITCH-1 |
| 0,5 | 5,n | | |
| 0,6 | 6,n | 0,1,2/(2*LINE_PITCH)-1 | 0,1/(2*LINE_PITCH)-1 |
| 0,7 | 7,n | | |

The invention further relates to a method for providing an efficient memory architecture 10 for image processing, comprising the steps of:
- structuring a memory array 11 as a multi-byte memory array having multiple data paths of equal multi-byte data width, and
- providing a multiplexing structure 13 at the output of the memory array 11 that selectively provides a multi-byte data path of a desired width containing a desired permutation of bytes chosen from one or more of the multiple data paths.

Advantageously according to the invention, the multiplexing structure 13 is provided by:
- combining one or more individual bytes from one or more multi-byte data paths to create multiple data paths of the desired width in the desired permutations based on the desired set of operations, and
- selecting a desired one of the created multiple multi-byte data paths, based on the desired operation.

Further advantageously according to the invention, the multiplexing structure 13 can be configured to provide different sets of byte permutations based on changing requirements

In summary, the present invention provides a memory architecture 10 which is efficient for image rotation by 90 degrees or a multiple of 90 degrees. Moreover, such a memory architecture 10 is efficient for image rotation by any amount, showing a same or even better performance than conventional memory architectures.

Finally, it can be verified that the proposed memory architecture is efficient for image mirroring, flipping and generating planar data (separating images into distinct luma and chroma planes).

To achieve these advantages, the memory architecture according to the invention comprises a memory which is arranged to provide multiple data paths of a wide multi-byte data width.

In particular, the individual bytes of each data path are combined in a configurable manner based on the desired image processing operation to produce a variable data path of the desired multi-byte data width that provides efficient memory access for the desired operation.

## Claims

1. A memory architecture (10) for image processing comprising:
- a memory array (11) having multiple multi-byte memory data paths of equal multi-byte data width, and
- a multiplexing structure (13) connected to the output of said multiple multi-byte data paths (11), capable of selectively providing a multi-byte data path of a desired width containing a desired permutation of bytes chosen from one or more of said multiple data paths.

2. The memory architecture (10) for image processing according to claim 1 wherein said multiplexing structure (13) comprises a two-level hierarchy of multiplexers in which:
- a first level (13A) of multiplexers combines one or more individual bytes from one or more multi-byte data paths to create multiple data paths of the desired width in the desired permutations based on the desired set of operations, and
- a second level (13B) of multiplexers selects a desired one of said created multiple multi-byte data paths, based on the desired operation.

3. The memory architecture (10) for image processing according to claim 1 wherein said multiplexing structure (13) is configurable to provide different sets of byte permutations based on changing requirements.

4. The memory architecture (10) for image processing according to claim 1 wherein said memory array (11) comprises a plurality of memory cuts.

5. The memory architecture (10) for image processing according to claim 4 wherein said memory cuts (11) are connected at their inputs to a controller (12) and at their outputs to said multiplexing structure (13), in turn connected to said controller (12).

6. The memory architecture (10) for image processing according to claim 5 wherein said controller (12) is further connected by respective address and data buses to a system bus and provides each of said memory cuts with an individual chip select signal and a byte enable signal and all said memory cuts (11) with address bits and write data and wherein signals issued from said memory cuts (11) are forwarded to said multiplexing structure (13) and used therein to pack the data so that all the bits can be used, said multiplexing structure (13) also receiving individual chip select and byte enable signals.

7. The memory architecture (10) for image processing according to claim 5, further comprising an image write logic block (14) and an image read logic block (15), being connected by respective address and data buses to said system bus for receiving data inputs and control signals.

8. The memory architecture (10) for image processing according to claim 7, wherein said image write and read logic blocks (14, 15) comprise respective write and read channels (16-18), in turn comprising read and write control blocks and being bi-directionally connected to respective write and read FIFO memories (16A-18A).

9. The memory architecture (10) for image processing according to claim 8, wherein said write and read FIFO memories (16A-18A) are further connected to an arbiter (19), in turn bi-directionally connected, through an interface (21) to said system bus.

10. A method for providing an efficient memory architecture (10) for image processing, comprising the steps of:
- structuring a memory array (11) as a multi-byte memory array having multiple data paths of equal multi-byte data width, and
- providing a multiplexing structure (13) at the output of said memory array (11) that selectively provides a multi-byte data path of a desired width containing a desired permutation of bytes chosen from one or more of said multiple data paths.

11. The method for providing an efficient memory architecture (10) for image processing according to claim 10, wherein said multiplexing structure (13) is provided by :
- combining one or more individual bytes from one or more multi-byte data paths to create multiple data paths of the desired width in the desired permutations based on the desired set of operations, and
- selecting a desired one of said created multiple multi-byte data paths, based on the desired operation.

12. The method for providing an efficient memory architecture (10) for image processing according to claim 10, wherein said multiplexing structure (13) can be configured to provide different sets of byte permutations based on changing requirements
